# EUROPÄISCHE PATENTSCHRIFT

(11) **EP 2 146 114 B1**
(45) Veröffentlichungstag und Bekanntmachung des Hinweises auf die Patenterteilung: **16.10.2019**
(21) Anmeldenummer: 09009298.2
(22) Anmeldetag: 16.07.2009
(51) Int. Cl.: F16H 25/20

(54) **Teleskop-Doppelspindelantrieb**
Telescopic double spindle drive
Entraînement à double broche télescopique

(30) Priorität: 18.07.2008 DE 102008033887
(43) Veröffentlichungstag der Anmeldung: 20.01.2010
(73) Patentinhaber: Weiss Präzisionstechnik GmbH & Co. KG, 78586 Deilingen (DE)
(72) Erfinder: Lessing, Carsten, 78586 Deilingen-Delkhofen (DE)
(74) Vertreter: Sebastian, Jens

(56) Entgegenhaltungen:
- EP-A1- 1 510 157
- WO-A1-01/89981
- DE-U1- 20 108 882
- US-A1- 2004 000 818

## Beschreibung

Die Erfindung betrifft einen Linearantrieb, insbesondere einen Spindelantrieb nach dem Oberbegriff des Anspruchs 1. Weiter betrifft die Erfindung eine Verstelleinheit mit einem Linearantrieb gemäß Anspruch 8.

Aus dem Stand der Technik sind allgemein verschiedene Linearantriebe bekannt. Aus der DE 2920133 B1 ist eine Hubvorrichtung mit mindestens zwei gegeneinander teleskopartig ausfahrbaren Gewindespindeln und mit diesen zusammenwirkenden, an den Gewindespindeln längs verstellbaren, umdrehbaren Muttern bekannt. Hierbei ist eine erste Gewindespindel angetrieben, wobei der Antrieb der zweiten Gewindespindel über eine Gleitführung durch die erste Gewindespindel erfolgt und die zweite Gewindespindel sich auf der ersten Gewindespindel abstützt. Die beiden sich im Wesentlichen über die Höhe der Hubvorrichtung in deren eingefahrenen Zustand erstreckenden Gewindespindeln sind unmittelbar ineinander angeordnet, wobei die Gewindespindeln durch eine Nut- und Federführung oder eine Mehrkantringführung axial beweglich (verschiebbar) und drehfest miteinander verbunden sind.

Die Hubvorrichtung ist relativ komplex aufgebaut und erfordert viele Bauteile. Zudem erfolgt der Antrieb ausschließlich über die erste Gewindespindel.

Weiter ist aus der US 2004/000818 A1 ein Linearantrieb mit einem ersten Element und einem zweiten Element bekannt, das mit Innengewinden versehen ist, die in entgegengesetzte Richtungen geschnitten sind, und ein Zwischenelement, das mit dem ersten und zweiten in Eingriff steht und axial verschiebbar ist über Außengewinde, die komplementär zu den Gewinden sind, die an dem ersten und dem zweiten Glied vorgesehen sind. Der lineare Aktuator umfasst weiterhin eine Hülle, die sich über das Zwischenelement erstreckt, wobei die Hülle in Bezug auf das erste und das zweite Element drehbar, jedoch in Längsrichtung verschiebbar angeordnet ist. Der Linearantrieb umfasst auch eine Antriebsstange, die drehbar, jedoch längsverschiebbar innerhalb des Zwischenglieds angeordnet ist. Eine medizinische Abgabevorrichtung, die mit einem solchen linearen Stellglied versehen ist, ist ebenfalls vorgesehen.

Aus der WO 01/89981 A1 ist eine teleskopartig bewegbare Struktur bekannt, umfassend eine Mutter, die drehfest bezüglich eines Rahmenteils montiert ist, ein Spindelrohr mit einem mit der Mutter in Eingriff stehenden Außengewinde, wobei das Spindelrohr ferner ein Innengewinde mit einer dem Außengewinde entgegengesetzten Richtung hat, wobei das Innengewinde mit einer mit einem Außengewinde versehenen drehfesten Spindel in Eingriff steht, wobei das Spindelrohr drehfest, jedoch in axialer Richtung verschiebbar mit einer Antriebswelle verbunden ist, wobei die Antriebswelle einen im Wesentlichen polygonalen Querschnitt aufweist, wobei ein Umfang zwei gegenüberliegende Längsspuren für den Eingriff mit drehmomentübertragenden Wälzkörpern bildet, die in einer im Spindelrohr befestigten Buchse gelagert sind, um dadurch die Übertragung eines großen Drehmoments ohne die Gefahr eines Fressens zwischen der Antriebswelle und dem Spindelrohr zu ermöglichen.

Aus der DE 201 08 882 U1, welche als der nächste Stand der Technik angesehen wird, ist ein Doppelspindelverstellantrieb mit einer drehbar gelagerten Gewindehohlspindel, dazu konzentrisch angeordnet einer Außenmutter sowie einer Innenspindel mit entgegengerichteter Gewindesteigung bekannt, wobei die Hohlspindel innen als Mitnehmerprofil ausgebildet ist, wobei zwischen Hohlspindel und Innenspindel ein mit einem Mitnahmeprofil versehenes, von einem Elektromotor angetriebenes Mitnahmeprofilrohr angeordnet ist, dessen Profil dem der Hohlspindel entspricht und wobei die Hohlspindel auf dem Mitnahmeprofilrohr verschiebbar ist, wobei auf der Hohlspindel die Außenmutter sitzt, die über ein Rohr fest mit dem Motorgehäuse verbunden ist, wobei die durch das Mitnahmeprofilrohr angetriebene Hohlspindel aus der mit dem Verbindungsrohr verbundenen Außenmutter heraus- oder hineindrehen kann, wobei die an der Vorderseite der Hohlspindel angeordnete Mutter in die Innenspindel angreift, wobei die Innenspindel an ihrem vorderen Ende verdrehfest am Sekundärteil des zu verstellenden Beschlags befestigt ist und so gegenüber dem Motorgehäuse verdrehfest angeordnet ist, wobei sich so die Innenspindel und die Hohlspindel durch ihre entgegengesetzten Gewindesteigungen je nach Drehrichtung heraus- oder hineindrehen und so annähernd den doppelten Verstellweg ergeben.

Aus der EP 1 510 157 A1 ist eine Ausstellungsvitrine bekannt, umfassend: eine Basis für eine Glocke, eine Glocke, die geeignet ist, zusammen mit der Basis einen Anzeigeraum in Bezug auf eine äußere Umgebung zu definieren, und eine Öffnungsvorrichtung für den Schaukasten, die eine Öffnung durch vertikale Verschiebung der Glocke in Bezug auf die Basis realisiert, wobei die Öffnungsvorrichtung mindestens zwei Hebegruppen umfasst, von denen jede mindestens drei koaxiale Teleskopelemente aufweist, die durch einen Schneckenmechanismus betätigt werden.
Es ist deshalb eine Aufgabe der vorliegenden Erfindung, einen Linearantrieb sowie Möbelstücke mit Linearantrieb zu schaffen, bei welchem ein einfacherer Aufbau, insbesondere mit weniger Bauteilen, realisiert ist.

Diese und weitere Aufgaben werden ausgehend von einem Linearantrieb nach Anspruch 1 und einer Verstelleinheit nach Anspruch 8 in Verbindung mit deren Merkmalen gelöst.

Vorteilhafte Weiterbildungen der Erfindung sind in den abhängigen Ansprüchen angegeben oder werden nachstehend im Zusammenhang mit der Beschreibung der Figuren angegeben.

Die Erfindung schließt die technische Lehre ein, dass bei einem Linearantrieb, insbesondere einem Spindelantrieb, mit einem mittig zwischen einem ersten Element und einem zweiten Element angeordneten, rotatorisch antreibbaren Kopplungselement, einem mit dem Kopplungselement in Wirkverbindung gekoppelten, insbesondere rotationsfesten, ersten Element und einem mit dem Kopplungselement in Wirkverbindung gekoppelten, dem ersten Element axial gegenüber angeordneten, insbesondere feststehenden, zweiten Element, sodass die beiden gegenüberstehenden Elemente sich über das bewegbare Kopplungselement auseinander bewegen, das heißt in Axialrichtung längs verschieben, lassen wobei eine Kopplung der Elemente mit dem Kopplungselement über entsprechende Gewindepaarungen erfolgt, vorgesehen ist, dass die Gewindepaarungen als gegenläufige Gewindepaarungen ausgebildet sind, um einen kompakten, im Wesentlichen dreiteiligen Linearantrieb mit einem maximalen Verfahrweg zu schaffen, wobei das erste Element als eine erste Gewindespindel mit einem ersten Spindelgewinde, das zweite Element als eine zweite Gewindespindel mit einem zweiten Spindelgewinde und das Kopplungselement als eine Spindelmutter mit je einem zu jedem Spindelgewinde korrespondierenden, mit dem entsprechenden Spindelgewinde zusammenwirkenden Muttergewinde ausgebildet ist, wobei eine erste Gewindepaarung umfassend das erste Spindelgewinde und ein korrespondierendes erstes Muttergewinde gegenläufig zu einer zweiten Gewindepaarung umfassend das zweite Spindelgewinde und ein korrespondierendes zweites Muttergewinde ausgebildet ist und wobei das Kopplungselement zwei axial zueinander beabstandete Kopplungsbereiche mit jeweils einem entsprechenden Gewinde aufweist, die zu dem jeweiligen Gewinde der Elemente korrespondieren, wobei die Gewinde axial fluchtend ausgebildet sind und das Kopplungselement mindestens eine Mitnahmeeinrichtung aufweist, über welche eine Verstelleinheit mit dem Linearantrieb koppelbar ist, wobei die Mitnahmeeinrichtung auf einer einem Hohlraum im Kopplungselement abgewandten Wandungsseite des Kopplungselements angeordnet ist. Feststehend bedeutet, dass das erste Element und das zweite Element rotationsfest in Bezug auf das Kopplungselement ausgebildet sind. Das erste Element und das zweite Element sind durch Rotation des Kopplungselements in deren Axialrichtung in Relation zu dem Kopplungselement bewegbar.

Die Erfindung schließt auch die technische Lehre ein, dass bei einem Linearantrieb, nämlich einem Spindelantrieb, mit einem mittig zwischen einem ersten Element und einem zweiten Element angeordneten, rotatorisch antreibbaren Kopplungselement, dem mit dem Kopplungselement in Wirkverbindung gekoppelten, ersten Element und dem mit dem Kopplungselement in Wirkverbindung gekoppelten, dem ersten Element axial gegenüber angeordneten, zweiten Element, sodass die beiden gegenüberstehenden Elemente sich über das bewegbare Kopplungselement auseinander bewegen, das heißt in Axialrichtung längs verschieben, lassen, wobei eine Kopplung der Elemente mit dem Kopplungselement über entsprechende Gewindepaarungen erfolgt, wobei die Gewindepaarungen als gegenläufige Gewindepaarungen ausgebildet sind, um einen kompakten, im Wesentlichen dreiteiligen Linearantrieb mit einem maximalen Verfahrweg zu schaffen, vorgesehen ist, dass das erste Element als eine erste Spindelmutter mit einem ersten Muttergewinde, das zweite Element als eine zweite Spindelmutter mit einem zweiten Muttergewinde und das Kopplungselement als eine Doppelgewindespindel mit je einem zu jedem Muttergewinde korrespondierenden, mit dem entsprechenden Muttergewinde zusammenwirkenden Spindelgewinde ausgebildet ist, wobei die Doppelgewindespindel in einem umfänglich äußeren Bereich als Hohlspindel ausgebildet ist und in einem darin befindlichen inneren Bereich als Vollgewindespindel oder als Hohlgewindespindel ausbildbar ist, wobei eine erste Gewindepaarung umfassend das erste Muttergewinde und ein korrespondierendes erstes Spindelgewinde gegenläufig zu einer zweiten Gewindepaarung umfassend das zweite Muttergewinde und ein korrespondierendes zweites Spindelgewinde ausgebildet ist und die Gewinde die gleiche Gewindesteigung bei gegenläufiger Spindelpaarung-Gewinderichtung aufweisen, wobei das Kopplungselement zwei axial zueinander beabstandete Kopplungsbereiche mit jeweils einem entsprechenden Gewinde aufweist, die zu dem jeweiligen Gewinde der Elemente korrespondieren, wobei die Gewinde axial fluchtend ausgebildet sind, wobei eine Mitnahmeeinrichtung auf einer einem Hohlraum im Kopplungselement abgewandten Wandungsseite des Kopplungselements angeordnet ist, und/oder das Kopplungselement mindestens eine Mitnahmeeinrichtung aufweist, über welche eine Verstelleinheit mit dem Linearantrieb koppelbar ist, wobei die Mitnahmeeinrichtung auf einer einem Hohlraum des Kopplungselements abgewandten Wandungsseite des Kopplungselementes angeordnet ist.

Die Erfindung schließt zudem die technische Lehre ein, dass bei einem Linearantrieb, nämlich ein Spindelantrieb, mit einem mittig zwischen einem ersten Element und einem zweiten Element angeordneten, rotatorisch antreibbaren Kopplungselement, dem mit dem Kopplungselement in Wirkverbindung gekoppelten, ersten Element und dem mit dem Kopplungselement in Wirkverbindung gekoppelten, dem ersten Element axial gegenüber angeordneten, zweiten Element, sodass die beiden gegenüberstehenden Elemente sich über das bewegbare Kopplungselement auseinander bewegen, das heißt in Axialrichtung längs verschieben, lassen, wobei eine Kopplung der Elemente mit dem Kopplungselement über entsprechende Gewindepaarungen erfolgt, wobei die Gewindepaarungen als gegenläufige Gewindepaarungen ausgebildet sind, um einen kompakten, im Wesentlichen dreiteiligen Linearantrieb mit einem maximalen Verfahrweg zu schaffen, wobei das erste Element als eine erste Gewindespindel mit einem ersten Spindelgewinde, das zweite Element als eine zweite Spindelmutter mit einem zweiten Muttergewinde und das Kopplungselement als eine Gewinde-Mutter-Spindel mit einem ersten Muttergewinde, welches mit dem ersten Spindelgewinde zusammenwirkt, und einem zweiten Spindelgewinde, welches mit dem zweiten Muttergewinde zusammenwirkt, ausgebildet ist, wobei eine erste Gewindepaarung umfassend das erste Muttergewinde und ein korrespondierendes erstes Spindelgewinde gegenläufig zu einer zweiten Gewindepaarung umfassend das zweite Muttergewinde und ein korrespondierendes zweites Spindelgewinde ausgebildet ist, wobei die Gewinde im Wesentlichen die gleiche Gewindesteigung bei gegenläufiger Spindelpaarung-Gewinderichtung aufweisen, vorgesehen ist, dass das Kopplungselement mindestens eine Mitnahmeeinrichtung aufweist, über welche eine Verstelleinheit mit dem Linearantrieb koppelbar ist, wobei die Mitnahmeeinrichtung auf einer einem Hohlraum des Kopplungselements abgewandten Wandungsseite des Kopplungselementes angeordnet ist.

Durch die gegenläufigen Gewindepaarungen lässt sich der Linearantrieb als Teleskoplinearantrieb ausbilden, das heißt, die beiden gegenüberstehenden feststehenden Elemente lassen sich über das bewegbare Kopplungselement auseinander bewegen, das heißt in Axialrichtung längs verschieben. Über das zentrale, angetriebene Kopplungselement ist ein synchrones Ausfahren, das heißt axiales Bewegen relativ zu dem Kopplungselement, der Elemente über einen Antrieb realisierbar. Die Elemente können als Hohlelemente oder als Vollelemente ausgebildet sein.

In einer Ausführungsform der vorliegenden Erfindung ist vorgesehen, dass das erste Element als eine erste Gewindespindel mit einem ersten Spindelgewinde, das zweite Element als eine zweite Gewindespindel mit einem zweiten Spindelgewinde und das Kopplungselement als eine Spindelmutter mit je einem zu jedem Spindelgewinde korrespondierenden, mit dem entsprechenden Spindelgewinde zusammenwirkenden Muttergewinde ausgebildet ist, wobei eine erste Gewindepaarung umfassend das erste Spindelgewinde und ein korrespondierendes erstes Muttergewinde gegenläufig zu einer zweiten Gewindepaarung umfassend das zweite Spindelgewinde und ein korrespondierendes zweites Muttergewinde ausgebildet ist.

Eine andere Ausführungsform der vorliegenden Erfindung sieht vor, dass das erste Element als eine erste Spindelmutter mit einem ersten Muttergewinde, das zweite Element als eine zweite Spindelmutter mit einem zweiten Muttergewinde und das Kopplungselement als eine Gewindespindel mit je einem zu jedem Muttergewinde korrespondierenden, mit dem entsprechenden Muttergewinde zusammenwirkenden Spindelgewinde (-abschnitt) ausgebildet ist, wobei eine erste Gewindepaarung umfassend das erste Muttergewinde und ein korrespondierendes erstes Spindelgewinde gegenläufig zu einer zweiten Gewindepaarung umfassend das zweite Muttergewinde und ein korrespondierendes zweites Spindelgewinde ausgebildet ist. Die Gewindespindel weist zwei unterschiedliche Gewinde auf. Dabei können die Gewinde hintereinander an einer gleichen Fläche ausgebildet sein. Alternativ können die Gewinde an unterschiedlichen Flächen ausgebildet sein. Auch können die Gewinde an der gleichen Fläche überlagert ausgebildet sein. Die Gewindespindel kann bevorzugt als Doppelgewindespindel ausgebildet sein.

In wiederum einer anderen Ausführungsform der vorliegenden Erfindung ist vorgesehen, dass das erste Element als eine erste Gewindespindel mit einem ersten Spindelgewinde, das zweite Element als eine zweite Spindelmutter mit einem zweiten Muttergewinde und das Kopplungselement als eine Gewinde-Mutter-Spindel mit einem ersten Muttergewinde, welches mit dem ersten Spindelgewinde zusammenwirkt, und einem zweiten Spindelgewinde, welches mit dem zweiten Muttergewinde zusammenwirkt, ausgebildet ist, wobei eine erste Gewindepaarung umfassend das erste Muttergewinde und ein korrespondierendes erstes Spindelgewinde gegenläufig zu einer zweiten Gewindepaarung umfassend das zweite Muttergewinde und ein korrespondierendes zweites Spindelgewinde ausgebildet ist.

Noch eine andere Ausführungsform der vorliegenden Erfindung sieht vor, dass das zweite Element als eine erste Gewindespindel mit einem ersten Spindelgewinde, das erste Element als eine zweite Spindelmutter mit einem zweiten Muttergewinde und das Kopplungselement als eine Gewinde-Mutter-Spindel mit einem ersten Muttergewinde, welches mit dem ersten Spindelgewinde zusammenwirkt, und einem zweiten Spindelgewinde, welches mit dem zweiten Muttergewinde zusammenwirkt, ausgebildet ist, wobei eine erste Gewindepaarung umfassend das erste Muttergewinde und ein korrespondierendes erstes Spindelgewinde gegenläufig zu einer zweiten Gewindepaarung umfassend das zweite Muttergewinde und ein korrespondierendes zweites Spindelgewinde ausgebildet ist. Diese Ausführungsform stellt die Umkehrung des unmittelbar zuvor aufgeführten Ausführungsbeispiel dar.

Es sind somit verschiedene Kombinationen des Linearantriebs mit den drei Bauteilen Kopplungselement, erstes Element und zweites Element realisierbar.

Es ist vorgesehen, dass die beiden Elemente koaxial zueinander ausgerichtet sind. Zwar können die Elemente auch versetzt zueinander ausgebildet werden, jedoch ist es für einen einfachen Aufbau bevorzugt, dass die Elemente koaxial zueinander angeordnet sind.

Ebenfalls ist vorgesehen, dass mindestens eines der beiden Elemente als Hohlelement mit einem Hohlinnenraum ausgebildet ist, in welchem das andere Element zumindest teilweise einfahrbar ist. Auf diese Weise lässt sich ein maximaler Ausfahrweg bei einem minimalen Platzbedarf realisieren. Durch ein Anordnen der Bauteile ineinander, lässt sich eine geringe Einbauhöhe realisieren. Der mit dem erfindungsgemäßen Linearantrieb realisierbar Hub entspricht etwa der zweifachen Einbauhöhe.

Die Erfindung sieht vor, dass die Gewinde im Wesentlichen die gleiche Gewindesteigung bei gegenläufiger Spindelpaarung-Gewinderichtung aufweisen, sodass ein synchroner Betrieb, das heißt, ein synchrones Ausfahren realisierbar ist. Bei einem Antrieb des Kopplungselements werden die Elemente axial im Wesentlichen gleichermaßen bewegt, also etwa im Verhältnis 1:1. Durch unterschiedliche Gewindesteigungen ließen sich andere, beliebige Verhältnisse realisieren.

In einem Ausführungsbeispiel der vorliegenden Erfindung ist vorgesehen, dass mindestens eines der Elemente einen Anschlag zur Begrenzung einer Linearbewegung des Linearantriebs aufweist. Hierdurch lässt sich ein Ausfahrweg auf einfache Weise begrenzen. Der Anschlag kann verschiebbar oder fest ausgebildet sein. Ein geeignetes Material für den Anschlag ist zum Beispiel ein elastisches Material wie Gummi, Hartgummi und dergleichen. Alternativ kann als Material für den Anschlag ein festes Material wie Stahl, Metall oder dergleichen ausgewählt sein. In einer bevorzugten Ausführungsform ist der Anschlag als Ring, insbesondere als Sprengring oder Segering ausgebildet. Der Anschlag kann insbesondere in einer bewegbaren, das heißt nicht ortsfesten, Anordnung zur Justierung des Linearantriebs fungieren. Insbesondere lässt sich über den Anschlag eine Steuerung justieren, zum Beispiel bei einem Erstbetrieb oder bei einer Nachjustierung. Weiter kann der Anschlag als Einbau- und/oder Montagehilfe genutzt werden. Der Anschlag kann an einer beliebigen Position an einem der Elemente angeordnet werden, beispielsweise an einem Ende benachbart zu dem Kopplungselement oder an dem zu dem Kopplungselement abgewandten Ende.

Ein Ausführungsbeispiel der vorliegenden Erfindung sieht vor, dass der Linearantrieb mindestens eine Führungseinrichtung zur Führung mindestens eine(r)s der Elemente aufweist. Durch die Führung lassen sich insbesondere längliche Elemente verwenden, welche ohne Führungseinrichtung einem Ausknicken ausgesetzt sind. Die Führungseinrichtung kann weiter die Laufeigenschaft des Linearantriebs verbessern. Es können mehrere Führungseinrichtungen vorgesehen sein. Die Führungseinrichtung kann beispielsweise als Profilrohr ausgebildet sein, beispielsweise als ein Profilrohr mit nicht rotationssymmetrischem Querschnitt. In dem letzteren Fall kann die Führungseinrichtung, insbesondere in Form eines Profilrohrs mit nicht rotationssymmetrischem Querschnitt als Verdrehsicherung verwendet werden. Die Verdrehsicherung bewirkt, dass sich das entsprechende Element nicht mit dem Kopplungselement mitdreht. Somit kann der Linearantrieb an einem Element drehfest mit einem weiteren Bauteil wie einem Möbelstück oder dergleichen angeordnet sein. Das andere Element kann gegen ein Mitdrehen mit dem Kopplungselement über die Führungseinrichtung gesichert sein. Dies ist insbesondere dann von Vorteil, wenn der Linearantrieb in einem Tischbein zum Einsatz kommt, insbesondere bei rotationssymmetrischen Tischbeinen. Das dann auf dem Boden aufstehende Element kann sich bei unzureichender Anpresskraft ohne Führungseinrichtung bei einem Verstellen auf dem Boden drehen, sodass Schleifspuren entstehen. Durch die Verdrehsicherung kann der Tisch in der Höhe verstellt werden, ohne dass sich das den Boden kontaktierende Element oder das dem Boden zugeordnete Element sich mit dem Kopplungselement mitdreht. Die Führungseinrichtung kann als Abstützhülse ausgebildet sein, welche zum Beispiel axiale Kräfte aufnehmen kann. Auf die Führungseinrichtung wirken keine axialen Kräfte.

Ein weiteres Ausführungsbeispiel der vorliegenden Erfindung sieht vor, dass die Führungseinrichtung integriert an mindestens einem der Elemente ausgebildet ist. Hierzu ist kein separates Bauteil erforderlich, sodass der Linearantrieb weiter eine kompakte Bauform mit wenigen Bauteilen aufweist. Bei einem Zusammenfahren des Linearantriebs kann die Führungseinrichtung mit zusammengefahren werden. Beispielsweise ist die Führungseinrichtung hierzu teleskopartig ausgebildet. Die Einbauhöhe des Linearantriebs ist allein von der Ausbildung der beiden Elemente und des Kopplungselements abhängig. Eine eventuelle Aktuatoreinrichtungshöhe fließt bei entsprechender Auslegung nicht in die Einbauhöhe des Linearantriebs mit ein.

Noch ein weiteres Ausführungsbeispiel der vorliegenden Erfindung sieht vor, dass mindestens eine Führungseinrichtung als separates Bauteil in dem Kopplungselement ausgebildet ist. Alternativ zu der Ausbildung an dem Element lässt sich die Führungseinrichtung ebenso an dem Kopplungselement ausbilden. Hierdurch ist eine Führung des Kopplungselements gewährleistet.

Die vorliegende Erfindung sieht vor, dass das Kopplungselement zwei axial zueinander beabstandete Kopplungsbereiche mit jeweils einem entsprechenden Gewinde aufweist, wobei die Gewinde axial fluchtend ausgebildet sind und zu dem jeweiligen Gewinde der Elemente korrespondieren. Die beabstandeten Kopplungsbereiche sind vorzugsweise derart beabstandet, dass dieser Abstand im Wesentlichen der Länge eines der Elemente entspricht.

Noch ein weiteres Ausführungsbeispiel der vorliegenden Erfindung sieht vor, dass der Abstand der Kopplungsbereiche korrespondierend zu mindestens einer der Längen der Gewinde der Elemente ausgebildet ist, sodass mindestens eines der Gewinde der Elemente im Wesentlichen in einen zwischen den Kopplungsbereichen und einer Kopplungswandung definierten Hohlraum einfahrbar ist. Auf diese Weise lässt sich im zusammengefahrenen Zustand ein kompakter Linearantrieb realisieren.

In einer Ausführungsform der vorliegenden Erfindung ist weiterhin vorgesehen, dass der Abstand im Wesentlichen korrespondierend zu einer axialen Länge des Hohlinnenraums ausgebildet ist.

Es ist vorgesehen, dass das Kopplungselement mindestens eine auf einer dem Hohlraum abgewandten Wandungsseite angeordnete Mitnahmeeinrichtung aufweist. Über die Mitnahmeeinrichtung lässt sich das Kopplungselement mit einem zu bewegenden Teil beispielsweise einem Tischbein oder dergleichen koppeln, sodass beispielsweise eine Hubverstellung möglich ist. Der Linearantrieb ist im Wesentlichen dreiteilig ausgebildet mit einem Kopplungselement und zwei Elementen. Wird der Linearantrieb in einem Tischbein oder dergleichen integriert, so ist das Tischbein entsprechend auch dreiteilig auszubilden. Ein mittlerer Teil ist dann über den Mitnehmer gekoppelt, um bei einer Höhenverstellung des Tischbeins das mittlere Teil oder die mittleren Teile in einer vorbestimmten Relativposition zu den andern beiden Teilen des Tischbeins zu positionieren. Insbesondere ist das mittlere Teil derart mit dem Kopplungselement gekoppelt, dass der mittlere Teil stets mittig zu den beiden anderen benachbarten Teilen des Tischbeins angeordnet ist.

Noch eine weitere Ausführungsform der vorliegenden Erfindung sieht vor, dass weiter eine Aktuatoreinrichtung mit einem Aktuator zum Antreiben des Kopplungselements vorgesehen ist. Während die Elemente feststehen, lässt sich über den Aktuator das Kopplungselement rotieren, wodurch ein axiales Verfahren der Spindeln realisiert ist. Dadurch, dass nur ein Element, nämlich das Kopplungselement, angetrieben wird, ist ein synchrones Auseinanderfahren der Spindeln in axialer Richtung realisierbar. Über die Gewindesteigung lässt sich beispielsweise ein Ausfahrverhältnis der Spindeln oder allgemeiner der Elemente, festlegen. Der Aktuator bzw. die Aktuatoreinrichtung kann direkt an dem Kopplungselement angeordnet sein. Bevorzugt ist der Aktuator an einem Ende des Linearantriebs angeordnet, sodass dieser sich bei einem Einbau an Verstelleinrichtungen wie Tischen versteckt anordnen lässt. Das Kopplungselement ist so ausgebildet, dass weder der Motor noch das Kopplungsteil im Wesentlichen axiale Kräfte des (Linearantriebs bzw.) der antreibenden Last aufnehmen muss, und somit über des Kopplungsteil von dem Linearantrieb in Bezug auf Axialkräfte entkoppelt ist. Die Aktuatoreinrichtung kann derart ausgebildet sein, dass dessen Bauhöhe keinen Einfluss auf die Bauhöhe des Linearantriebs hat. Hierzu kann der Aktuator einen entsprechenden Durchlass aufweisen, durch welchen der Linearantrieb zumindest teilweise durchgesteckt werden kann, insbesondere ein Element des Linearantriebs. Somit umgibt der Aktuator den Linearantrieb. In diesem Durchlass kann ebenfalls das Kopplungsteil angeordnet sein, sodass dieses ebenfalls keinen Einfluss auf die Einbauhöhe des Aktuators hat. Das Kopplungselement kann per Hand angetrieben werden, zum Beispiel auch über eine Kurbel oder ein anderes Hilfsmittel. Bevorzugt ist ein als Elektromotor oder dergleichen ausgebildeter Aktuator vorgesehen.

Noch ein weiteres Ausführungsbeispiel der vorliegenden Erfindung sieht vor, dass die Aktuatoreinrichtung ein Kopplungsteil zum Koppeln des Aktuators mit dem Kopplungselement aufweist. Über das entsprechende Kopplungsteil wird das Kopplungselement von dem Aktuator angetrieben, das heißt bewegt.

Noch eine weitere Ausführungsform der vorliegenden Erfindung sieht vor, dass der Kopplungsteil und das Kopplungselement jeweils korrespondierende Eingriffsmittel zum Übertragen einer Antriebskraft von dem Aktuator auf das Kopplungselement aufweisen. Durch den Kopplungsteil wird die Aktuatoreinrichtung in Bezug auf axiale Kräfte des Linearantriebs von dem Linearantrieb entkoppelt. Das Kopplungsteil kann beispielsweise, wie das Kopplungselement auch, als Vierkantrohr ausgebildet sein.

Eine andere Ausführungsform der vorliegenden Erfindung sieht vor, dass die Eingriffsmittel eine Verdrehsicherung, insbesondere jeweils korrespondierender, nicht rotationssymmetrische Konturen, aufweisen. Hierdurch kann eine verdrehsichere Kraftübertragung durch Ineinanderstecken von Kopplungselement und Kopplungsteil erfolgen.

Wiederum eine andere Ausführungsform der vorliegenden Erfindung sieht vor, dass der Kopplungsteil als Profilrohr mit einem hohlen Innenraum zur zumindest teilweisen Aufnahme einer der Elemente ausgebildet ist. Auf diese Weise lässt sich eine äußerst kompakte Bauform des Linearantriebs realisieren, indem Teile in dem Innenraum angeordnet sind.

Zudem lässt sich in einer anderen Ausführungsform der vorliegenden Erfindung vorsehen, dass der Innenraum eine im Wesentlichen zu einer Länge des aufnehmenden Gewindes des Elementes korrespondierende Länge aufweist.

In bevorzugten Ausführungsformen lässt sich das Kopplungsteil innenliegend anordnen, das heißt, es verläuft zumindest teilweise in einem Hohlraum in den Elementen und/oder des Kopplungselements.

Die Erfindung schließt weiter die technische Lehre ein, dass bei einer Verstelleinheit, umfassend mindestens ein erstes und ein zweites Verstellteil, welche relativ zueinander verstellbar sind, ein erfindungsgemäßer Linearantrieb zum Verstellen der Verstelleinheit und/oder der daran angeschlossenen Verstelleinheiten vorgesehen ist. Die Verstelleinheit kann eine Möbeleinheit, eine automotive Einheit, eine Lampeneinheit, eine Monitoreinheit oder eine andere beliebige Einheit sein, bei der mindestens zwei Bestandteile axial zueinander gesteuert bewegt werden

In einer Ausführungsform der vorliegenden Erfindung ist vorgesehen, dass das erste und/oder das zweite Verstellteil einen Verstellteilhohlraum aufweist/aufweisen, in welchem der Linearantrieb zumindest teilweise angeordnet ist. Bevorzugt sind das Kopplungselement und die Elemente in dem Verstellteilhohlraum anzuordnen.

Noch eine weitere Ausführungsform der vorliegenden Erfindung sieht vor, dass das erste, das zweite oder ein beliebiges Verstellteil über eine Mitnahme des Linearantriebs mit dem Linearantrieb verstellbar gekoppelt ist/sind. Aufgrund der kompakten Bauform lässt sich der Linearantrieb bequem in der Verstelleinheit anordnen.

Noch eine weitere Ausführungsform der Erfindung sieht vor, dass die Verstelleinheit als Möbelstück ausgebildet ist, ausgewählt aus der Gruppe umfassend: Tischbeine, Stuhlbeine, Regalbeine, Bettenbeine, Bettenverstelleinrichtungen, Computertische und dergleichen.

Zusammenfassend ist der Linearantrieb im einfachsten Fall aus drei Bauteilen aufgebaut: einem ersten Element, einem zweiten Element und dazwischen mit einem Kopplungselement, welches die beiden Elemente koppelt. Durch rotieren des Kopplungselements werden die beiden Elemente axial bewegt. Das Rotieren kann durch eine Aktuatoreinrichtung erfolgen. Die Aktuatoreinrichtung ist hinsichtlich axialer Kräfte von den drei zuvor aufgeführten Bauteilen entkoppelt. Die Elemente sind verdrehsicher angeordnet. Dies kann zum Beispiel über eine separate Verdrehsicherung erfolgen, die beispielsweise durch eine Führungseinrichtung realisiert ist. Der Linearantrieb mit Aktuatoreinrichtung und optional mit Führungseinrichtung erfordert keine Axiallagerung zum Aufnehmen axialer Lasten. Die Aufhängung des Linearantriebs kann mittels der Führungseinrichtung, die als Verdrehsicherung ausgebildet ist, einseitig erfolgen, sodass ein Element rotationsfest aufgehängt ist. Ist keine Verdrehsicherung vorgesehen, müssen beide Elemente rotationsfest oder verdrehsicher angeordnet sein. Die Aktuatoreinrichtung wird über eine Steuerung gesteuert. Diese kann bezüglich vorbestimmbarer Ausfahrposition justiert werden, zum Beispiel unter Verwendung eines Anschlags. Hierüber lassen sich beispielsweise Anfangs- und Endposition leicht justieren. Der Linearantrieb ist als Teleskopantrieb ausgebildet. Die drei Bauteile, die sich im Wesentlichen etwa gleich lang ausbilden lassen, können ineinander verfahren werden, so dass sich eine kompakte Bauform im eingefahrenen Zustand ergibt, die in etwa der Länge eines Bauteils entspricht. Der mit diesem Linearantrieb erreichbare maximale Hub entspricht dann etwa der zweifachen Länge des Linearantriebs im eingefahrenen Zustand. Bei entsprechender Gewindeauslegung (gegenläufig, Gewindesteigung gleich) lässt sich ein synchrones Verfahren des Linearantriebs realisieren.

Weitere, die Erfindung verbessernde Maßnahmen, sind in den Unteransprüchen angegeben oder ergeben sich aus der nachfolgenden Beschreibung von mindestens einem Ausführungsbeispiel der Erfindung, welches in den Figuren schematisch dargestellt ist. Sämtliche aus den Ansprüchen, der Beschreibung oder der Zeichnung hervorgehenden Merkmale und/oder Vorteile, einschließlich konstruktiver Einzelheiten, räumliche Anordnungen und/oder Verfahrensschritte können sowohl für sich als auch in verschiedensten Kombinationen erfindungswesentlich sein.

In den Figuren ist Folgendes dargestellt:
- Fig. 1-3: zeigen schematisch in einer Seitenquerschnittsansicht einen Linearantrieb in einem ausgefahrenen, einem teilweise aus-/bzw. eingefahrenen und einem eingefahrenen Zustand,
- Fig. 4-6: zeigen schematisch den Linearantrieb nach Figur 1 in einer Seitenquerschnittsansicht mit einer zusätzlichen Führungseinrichtung und
- Fig 7-9: zeigen schematisch eine andere Ausführungsform des Linearantriebs mit zwei Spindelmuttern und einer (Doppel-)Gewindespindel.

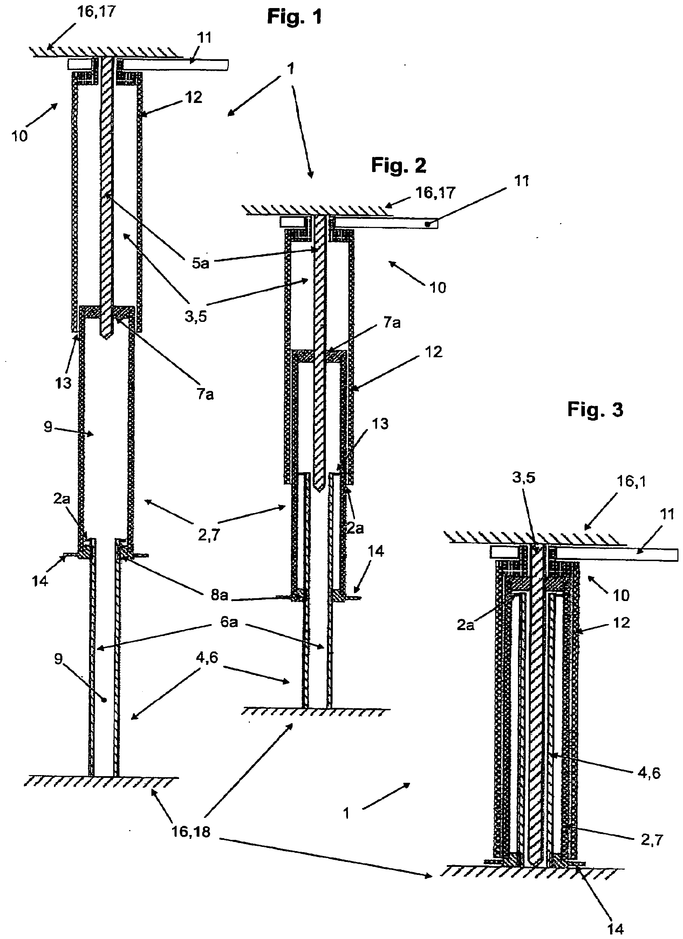

Figur 1-3 zeigen schematisch in einer Seitenquerschnittsansicht einen Linearantrieb 1. Der Linearantrieb 1 ist als Teleskop-Doppelspindelantrieb ausgebildet mit einem mittigen, antreibbaren Kopplungselement 2, einem mit dem Kopplungselement 2 in Wirkverbindung gekoppelten, nicht angetriebenen, das heißt in Bezug auf eine Rotation feststehenden, ersten Element 3 und einem mit dem Kopplungselement 2 in Wirkverbildung gekoppelten, dem ersten Element 3 axial gegenüber angeordneten, feststehenden zweiten Element 4. Das erste Element 3 ist als erste Gewindespindel 5 mit einem ersten Spindelgewinde 5a ausgebildet. Das zweite Element 4 ist als eine zweite Gewindespindel 6 mit einem zweiten Spindelgewinde 6a ausgebildet. Die zweite Gewindespindel 6 und auch das Kopplungselement 2 sind vorliegend als hohle Bauteile ausgebildet, einmal als Hohlspindel und einmal als Hohlrohr, mit einem Hohlinnenraum 9, in welchem die erste Gewindespindel 5 zumindest teilweise einfahrbar ist. Somit ist das zweite Element 4 im Wesentlichen als Hohlzylinder ausgebildet. Das Kopplungselement 2, das erste Element 3 und das zweite Element 4 sind koaxial zueinander angeordnet, sodass diese einen teleskopartigen Aufbau ergeben. Das Kopplungselement 2 ist als Spindelmutter 7 mit einem ersten Muttergewinde 7a, welches zu dem ersten Element 3, genauer dem ersten Spindelgewinde 5a korrespondiert, und einem zweiten Muttergewinde 8a, welches zu dem zweiten Spindelgewinde 6a korrespondiert, ausgebildet. Die beiden Muttergewinde 7a, 8a sind axial beabstandet zueinander ausgebildet, wobei der Abstand im Wesentlichen der Länge der Gewinde 5a, 6a der Gewindespindeln 5,6 in Längsrichtung entspricht. Weiter umfasst der Linearantrieb 1 eine Aktuatoreinrichtung 10, welche einen Aktuator 11 und ein Kopplungsteil 12 umfasst. Der Aktuator 11 ist vorliegend als (Elektro-)Motor ausgebildet, welcher das Kopplungsteil 12 antreibt. Das Kopplungsteil 12 ist als Profilhohlrohr ausgebildet, welches über Eingriffsmittel 13 mit dem Kopplungselement 2 im Eingriff steht. Vorliegend sind die Eingriffsmittel 13 als nicht rotationssymmetrische Konturen ausgebildet. Das heißt der Kopplungsteil 12 ist als hohles Profilantriebsrohr ausgebildet, welcher das Kopplungselement 2 zumindest teilweise verdrehsicher umfasst, wobei die Außenkontur des Kopplungselements 2 nicht rotationssymmetrisch ist, wie auch die Innenkontur des Antriebsrohres (entspricht Kopplungsteil 12). Beispielsweise ist das Profilantriebsrohr als Vierkantrohr ausgebildet. In dem Antriebsrohr 12 ist die erste Gewindespindel 5 angeordnet, sowie teilweise das Kopplungselement 2. Das Antriebsrohr 12 ist ebenfalls koaxial zu dem Kopplungselement 2 und den beiden Gewindespindeln 3 und 4 angeordnet. Durch diese Art der Ausführung ist ein dreiteiliger Linearantrieb 1 mit Aktuatoreinrichtung 10 ausgebildet. Spezielle Lagerungen oder Lagerelemente, insbesondere Axiallagerungen zum Aufnehmen axialer Kräfte, sind für die Lagerung der Elemente 3,4 nicht erforderlich.

In Figur 1 ist der Linearantrieb 1 im Wesentlichen in einer maximalen Ausfahrlänge dargestellt. Um die Ausfahrlänge zu begrenzen, weist vorliegend die zweite Gewindespindel 6 an deren in dem Kopplungselement 2 gelegenen Ende einen Anschlag 2a auf, der von innen bei Erreichen eines einstellbaren maximalen Ausfahrwegs gegen einen korrespondierenden Abschnitt des Kopplungselements 2 anschlägt.

In Figur 2 ist der Linearantrieb 1 nach Fig. 1 nur teilweise ein- bzw. ausgefahren. Hierbei erkennt man, wie die Bauteile des Linearantriebs 1, das Kopplungselement 2 und die beiden Elemente 3,4 ineinander gefahren werden, sodass nur ein minimaler Bauraum für den Linearantrieb 1 erforderlich ist. Zudem werden das Kopplungselement 2 sowie die zweite Gewindespindel 6 in das Antriebsrohr 12 eingefahren.

In Figur 3 ist schließlich der komplett eingefahrene Linearantrieb 1 zu erkennen. In Längsrichtung, das heißt in axialer Richtung, ist die Länge des Linearantriebs 1 in etwa gleich der axialen Länge der ersten Gewindespindel 5. Um nun mit weiteren, hier nicht dargestellten, Verstelleinheiten zusammenzuwirken, weist der Linearantrieb 1, genauer das Kopplungselement 2 an dessen entfernt zu dem Aktuator 11 gelegenen Ende eine Mitnahme 14 auf, über welche eine Verstelleinheit mit dem Linearantrieb 1 koppelbar ist. Um das teleskopartige Ein- und Ausfahren bei einem Antrieb des Kopplungselements 2 zu gewährleisten, sind die Gewindepaarungen zwischen erster Gewindespindel 5 und Kopplungselement 2, beziehungsweise zweitem Muttergewinde 8 und zweitem Element 4, genauer dem zweiten Spindelgewinde 6a und dem Kopplungselement 2, genauer dem Muttergewinde 8a gegenläufig ausgebildet. Das heißt, vorliegend weist die erste Gewindespindel 5 ein Rechtsgewinde und die zweite Gewindespindel 6 ein Linksgewinde oder umgekehrt auf.

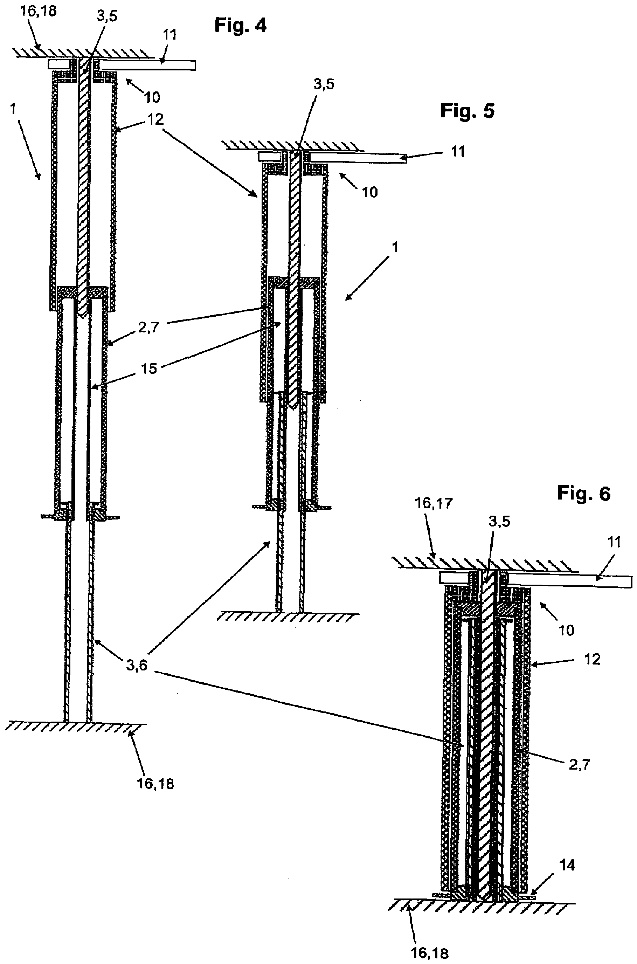

In den Fig. ist am oberen und unteren Ende der Linearantriebe 1 jeweils ein schraffierter Bereich dargestellt. Dieser Bereich repräsentiert zum Beispiel Komponenten, die relativ zueinander über den Linearantrieb 1 verstellbar sind, insbesondere in axiale Richtung des Linearantriebs 1. Insbesondere kennzeichnet der schraffierte Bereich, dass der Aktuator relativ zu dem schraffierten Bereich fixiert ist. Insbesondere stellt der schraffierte Bereich eine Verstelleinheit 16 dar, welche ein erstes Verstellteil 17 und ein zweites Verstellteil 18 umfasst, die relativ zueinander, insbesondere in axialer Richtung, verstellbar sind. Die Verstelleinheit 16 ist über den Mitnehmer 14 mit dem Linearantrieb 1 gekoppelt und kann so entsprechend verstellt werden. Ist eine verdrehsichere Führungseinrichtung 15 (Fig4-6) vorgesehen, so muss der Linearantrieb nicht rotationsfest in Bezug auf den schraffierten Bereich 18 ausgebildet sein, da die Führungseinrichtung 15 ein Mitdrehen mit dem Kopplungselement 2 verhindert.

Figuren 4-6 zeigen den Linearantrieb 1 mit einer zusätzlichen Stütz- und Führungshülse 15. Im Übrigen entspricht der Linearantrieb 1 nach Fig. 4-6 dem Linearantrieb nach Fig. 1-3. Die Stütz-Führungshülse 15 ist bevorzugt in dem Kopplungselement 2 angeordnet und bewirkt ein leichteres Einfädeln der ersten Gewindespindel 5 in die zweite Gewindespindel 6 bei einem Einfahren des Linearantriebs 1. Vorzugsweise ist die Stütz-Führungshülse 15 zylindrisch ausgebildet, sodass diese platzsparend in dem Linearantrieb 1 angeordnet werden kann.

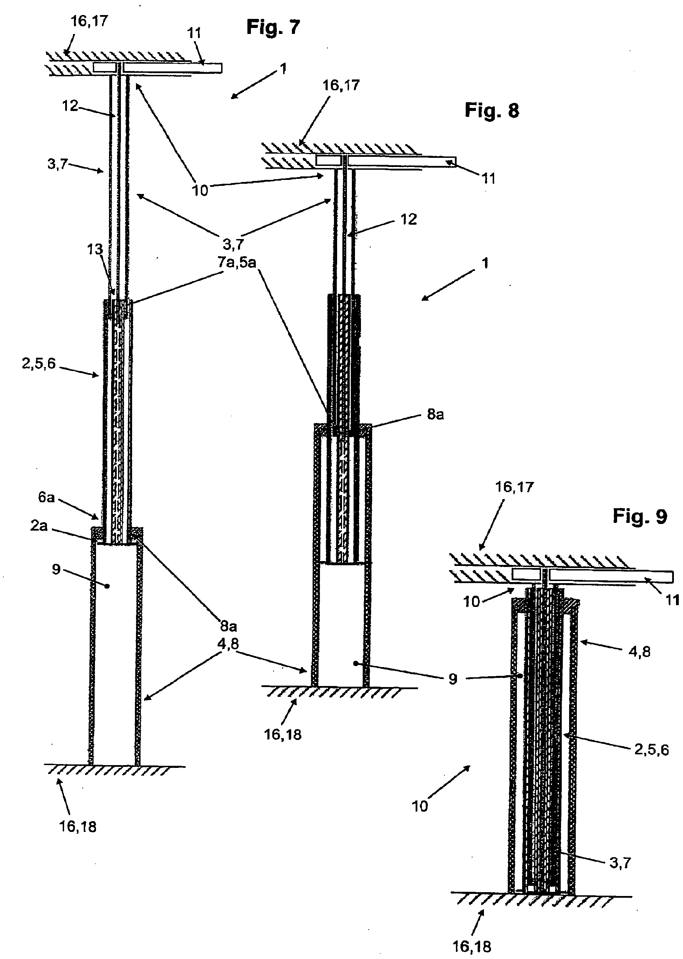

Figuren 7 - 9 zeigen eine andere Ausführungsform des Linearantriebs 1, wobei das Kopplungselement 2 und die Elemente 3,4 sich hinsichtlich ihrer Ausführung gegenüber Fig. 1-3 unterscheiden. Das Kopplungselement 2 ist in den Fig. 7-9 als antreibbare Gewindespindel 5 ausgebildet, genauer als Doppelgewindespindel 5. Die Doppelgewindespindel 5 ist in einem umfänglich äußeren Bereich als Hohlspindel ausgebildet. In einem darin befindlichen inneren Bereich ist die Doppelgewindespindel 5 als Vollgewindespindel oder als Hohlgewindespindel ausbildbar. In Fig. 7-9 ist die Doppelgewindespindel 5 im inneren Bereich als Hohlspindel ausgebildet, um das Kopplungsteil 12 der Aktuatoreinrichtung 10 darin wirkverbunden aufzunehmen. In dem äußeren Bereich weist die Gewindespindel 5 ein erstes Spindelgewinde 5a auf, welches als Außengewinde ausgebildet ist. Im inneren Bereich weist die Gewindespindel 5 ein zweites Spindelgewinde 6a auf, welches ebenfalls als Außengewinde ausgebildet ist, jedoch gegenläufig zu dem anderen Außengewinde. Die Gewindespindel 5 weist in den Fig. 7-9 also zwei Gewindespindelabschnitte auf, die mehrteilig, bevorzugt einteilig ausgebildet sind. Die Elemente 3, 4 sind in den Fig. 7-9 als Spindelmuttern 7,8 ausgebildet, genauer als feste Endrohre, insbesondere als Rund- oder Profilrohre mit entsprechenden Muttergewindeabschnitten, die mit dem entsprechenden, korrespondierenden Gewinde des Kopplungselementes 2 zusammenwirken.

Aus den drei Bauteilen Kopplungselement 2, erstes Element 3, zweites Element 4, die im Wesentlichen den Linearantrieb 1 bilden, lassen sich mit beliebigen Kombinationen der Bauteile weitere Ausführungsformen realisieren.

Nicht dargestellt ist beispielsweise eine Ausführungsform, die wie folgt aufgebaut ist.

Das erste Element 3 ist als erste Gewindespindel 5, insbesondere als Hohlspindel ausgebildet. Das Kopplungselement 2 ist als zweite Gewindespindel 6 ausgebildet, wobei diese in einem äußeren Bereich als Hohlspindel und in einem inneren Bereich als Profilrohr oder als Profilstab ausgebildet ist, jeweils mit entsprechendem Gewinde. Das zweite Element 4 ist als Spindelmutter 7 ausgebildet, welche an einem zu dem Kopplungselement 2 gelegenen Bereich ein entsprechendes Muttergewinde 7a aufweist.

## Patentansprüche

1. Linearantrieb (1), insbesondere ein Spindelantrieb, mit
einem mittig zwischen einem ersten Element (3) und einem zweiten Element (4) angeordneten, rotatorisch antreibbaren Kopplungselement (2), dem mit dem Kopplungselement (2) in Wirkverbindung gekoppelten, ersten Element (3) und dem mit dem Kopplungselement (2) in Wirkverbindung gekoppelten, dem ersten Element (3) axial gegenüber angeordneten, zweiten Element (4), sodass die beiden gegenüberstehenden Elemente (3, 4) sich über das bewegbare Kopplungselement (2) auseinander bewegen, das heißt in Axialrichtung längs verschieben, lassen, wobei eine Kopplung der Elemente (3, 4) mit dem Kopplungselement (2) über entsprechende Gewindepaarungen erfolgt, **dadurch gekennzeichnet, dass**
die Gewindepaarungen als gegenläufige Gewindepaarungen ausgebildet sind, um einen kompakten, im Wesentlichen dreiteiligen Linearantrieb (1) mit einem maximalen Verfahrweg zu schaffen, wobei das erste Element (3) als eine erste Gewindespindel (6) mit einem ersten Spindelgewinde (5a), das zweite Element (4) als eine zweite Gewindespindel (6) mit einem zweiten Spindelgewinde (6a) und das Kopplungselement (2) als eine Spindelmutter (7) mit je einem zu jedem Spindelgewinde (5a, 6a) korrespondierenden, mit dem entsprechenden Spindelgewinde (5a, 6a) zusammenwirkenden Muttergewinde (7a, 8a) ausgebildet ist, wobei eine erste Gewindepaarung (5a, 7a) umfassend das erste Spindelgewinde (5a) und ein korrespondierendes erstes Muttergewinde (7a) gegenläufig zu einer zweiten Gewindepaarung (6a, 8a) umfassend das zweite Spindelgewinde (6a) und ein korrespondierendes zweites Muttergewinde (8a) ausgebildet ist und wobei das Kopplungselement (2) zwei axial zueinander beabstandete Kopplungsbereiche mit jeweils einem entsprechenden Gewinde aufweist, die zu dem jeweiligen Gewinde der Elemente (3, 4) korrespondieren, wobei die Gewinde axial fluchtend ausgebildet sind und das Kopplungselement (2) mindestens eine Mitnahmeeinrichtung (14) aufweist, über welche eine Verstelleinheit mit dem Linearantrieb (1) koppelbar ist, wobei die Mitnahmeeinrichtung (14) auf einer einem Hohlraum im Kopplungselement (2) abgewandten Wandungsseite des Kopplungselements (2) angeordnet ist.

2. Linearantrieb (1), nämlich ein Spindelantrieb, mit einem mittig zwischen einem ersten Element (3) und einem zweiten Element (4) angeordneten, rotatorisch antreibbaren Kopplungselement (2), dem mit dem Kopplungselement (2) in Wirkverbindung gekoppelten, ersten Element (3) und dem mit dem Kopplungselement (2) in Wirkverbindung gekoppelten, dem ersten Element (3) axial gegenüber angeordneten, zweiten Element (4), sodass die beiden gegenüberstehenden Elemente (3, 4) sich über das bewegbare Kopplungselement (2) auseinander bewegen, das heißt in Axialrichtung längs verschieben, lassen, wobei eine Kopplung der Elemente (3, 4) mit dem Kopplungselement (2) über entsprechende Gewindepaarungen erfolgt, wobei die Gewindepaarungen als gegenläufige Gewindepaarungen ausgebildet sind, um einen kompakten, im Wesentlichen dreiteiligen Linearantrieb (1) mit einem maximalen Verfahrweg zu schaffen, **dadurch gekennzeichnet, dass**
das erste Element (3) als eine erste Spindelmutter (7) mit einem ersten Muttergewinde (7a), das zweite Element (4) als eine zweite Spindelmutter (8) mit einem zweiten Muttergewinde (8a) und das Kopplungselement (2) als eine Doppelgewindespindel (5) mit je einem zu jedem Muttergewinde (7a,8a) korrespondierenden, mit dem entsprechenden Muttergewinde (7a,8a) zusammenwirkenden Spindelgewinde (5a,6a) ausgebildet ist, wobei die Doppelgewindespindel (5) in einem umfänglich äußeren Bereich als Hohlspindel ausgebildet ist und in einem darin befindlichen inneren Bereich als Vollgewindespindel oder als Hohlgewindespindel ausbildbar ist, wobei eine erste Gewindepaarung (5a,7a) umfassend das erste Muttergewinde (7a) und ein korrespondierendes erstes Spindelgewinde (5a) gegenläufig zu einer zweiten Gewindepaarung (8a,6a) umfassend das zweite Muttergewinde (8a) und ein korrespondierendes zweites Spindelgewinde (6a) ausgebildet ist und die Gewinde (5a, 6a, 7a, 8a) die gleiche Gewindesteigung bei gegenläufiger Spindelpaarung-Gewinderichtung (5a-7a, 6a-8a) aufweisen, wobei das Kopplungselement (2) zwei axial zueinander beabstandete Kopplungsbereiche mit jeweils einem entsprechenden Gewinde aufweist, die zu dem jeweiligen Gewinde der Elemente (3, 4) korrespondieren, wobei die Gewinde axial fluchtend ausgebildet sind, wobei eine Mitnahmeeinrichtung (14) auf einer einem Hohlraum im Kopplungselement (2) abgewandten Wandungsseite des Kopplungselements (2) angeordnet ist, und/oder das Kopplungselement (2) mindestens eine Mitnahmeeinrichtung (14) aufweist, über welche eine Verstelleinheit mit dem Linearantrieb (1) koppelbar ist, wobei die Mitnahmeeinrichtung (14) auf einer einem Hohlraum des Kopplungselements (2) abgewandten Wandungsseite des Kopplungselementes (2) angeordnet ist.

3. Linearantrieb (1), nämlich ein Spindelantrieb, mit einem mittig zwischen einem ersten Element (3) und einem zweiten Element (4) angeordneten, rotatorisch antreibbaren Kopplungselement (2), dem mit dem Kopplungselement (2) in Wirkverbindung gekoppelten, ersten Element (3) und dem mit dem Kopplungselement (2) in Wirkverbindung gekoppelten, dem ersten Element (3) axial gegenüber angeordneten, zweiten Element (4), sodass die beiden gegenüberstehenden Elemente (3, 4) sich über das bewegbare Kopplungselement (2) auseinander bewegen, das heißt in Axialrichtung längs verschieben, lassen, wobei eine Kopplung der Elemente (3, 4) mit dem Kopplungselement (2) über entsprechende Gewindepaarungen erfolgt, wobei die Gewindepaarungen als gegenläufige Gewindepaarungen ausgebildet sind, um einen kompakten, im Wesentlichen dreiteiligen Linearantrieb (1) mit einem maximalen Verfahrweg zu schaffen, wobei das erste Element (3) als eine erste Gewindespindel (5) mit einem ersten Spindelgewinde (5a), das zweite Element (4) als eine zweite Spindelmutter (8) mit einem zweiten Muttergewinde (8a) und das Kopplungselement (2) als eine Gewinde-Mutter-Spindel mit einem ersten Muttergewinde (7a), welches mit dem ersten Spindelgewinde (5a) zusammenwirkt, und einem zweiten Spindelgewinde (6a), welches mit dem zweiten Muttergewinde (8a) zusammenwirkt, ausgebildet ist, wobei eine erste Gewindepaarung (5a,7a) umfassend das erste Muttergewinde (7a) und ein korrespondierendes erstes Spindelgewinde (5a) gegenläufig zu einer zweiten Gewindepaarung (8a,6a) umfassend das zweite Muttergewinde (8a) und ein korrespondierendes zweites Spindelgewinde (6a) ausgebildet ist, wobei die Gewinde (5a, 6a, 7a, 8a) im Wesentlichen die gleiche Gewindesteigung bei gegenläufiger Spindelpaarung-Gewinderichtung (5a-7a, 6a-8a) aufweisen, **dadurch gekennzeichnet, dass**
das Kopplungselement (2) mindestens eine Mitnahmeeinrichtung (14) aufweist, über welche eine Verstelleinheit mit dem Linearantrieb (1) koppelbar ist, wobei die Mitnahmeeinrichtung (14) auf einer einem Hohlraum des Kopplungselements (2) abgewandten Wandungsseite des Kopplungselementes (2) angeordnet ist.

4. Linearantrieb (1) nach einem der vorherigen Ansprüche 1 bis 3, **dadurch gekennzeichnet, dass**
mindestens eine der beiden Elemente (3,4) als Hohlelement mit einem Hohlinnenraum (9) ausgebildet ist, in welchen das andere Element (4,3) zumindest teilweise einfahrbar ist.

5. Linearantrieb (1) nach einem der vorherigen Ansprüche 1 bis 4, **dadurch gekennzeichnet, dass**
der Linearantrieb (1) mindestens eine Führungseinrichtung (15) zur Führung mindestens einer der Elemente (3, 4) aufweist.

6. Linearantrieb (1) nach einem der vorherigen Ansprüche 1 bis 5, **dadurch gekennzeichnet, dass**
der Abstand der Kopplungsbereiche korrespondierend zu mindestens einer der Längen der Gewinde der Elemente (3,4) ausgebildet ist, sodass mindestens eines der Gewinde der Elemente (3,4) im Wesentlichen in einen zwischen den Kopplungsbereichen und einer Kopplungswandung definierten Hohlraum einfahrbar ist.

7. Linearantrieb (1) nach einem der vorherigen Ansprüche 1 bis 6, **dadurch gekennzeichnet, dass**
weiter eine Aktuatoreinrichtung (10) mit einem Aktuator (11) zum Antreiben des Kopplungselements (2) vorgesehen ist.

8. Verstelleinheit (16) umfassend mindestens ein erstes und ein zweites Verstellteil (17,18), welche relativ zueinander verstellbar sind mit einem Linearantrieb (1) nach einem der der vorherigen Ansprüche 1 bis 7 zum Verstellen der Verstelleinheit (16) und/oder der daran angeschlossenen Verstelleinheiten.

9. Verstelleinheit (16) nach Anspruch 8, **dadurch gekennzeichnet, dass**
das erste und/oder das zweite Verstellteil (17,18) einen Verstellteilhohlraum aufweist, in welchem der Linearantrieb (1) zumindest teilweise angeordnet ist.

10. Verstelleinheit (16) nach Anspruch 8 oder 9, **dadurch gekennzeichnet, dass**
das erste und/oder das zweite Verstellteil (17,18) über eine Mitnahme (14) des Linearantriebs (1) mit dem Linearantrieb (1) verstellbar gekoppelt ist.

11. Verstelleinheit (16) nach einem der vorherigen Ansprüche 8 bis 10, **dadurch gekennzeichnet, dass**
die Verstelleinheit (16) als Möbelstück ausgebildet ist, ausgewählt aus der Gruppe umfassend: Tischbeine, Stuhlbeine, Regalbeine, Bettenbeine, Bettenverstelleinrichtungen, Computertische und dergleichen.

## Claims

1. Linear drive (1), in particular a spindle drive, having a rotationally driveable coupling element (2) which is arranged centrally between a first element (3) and a second element (4), the first element (3), which is coupled in operative connection to the coupling element (2), and the second element (4), which is coupled in operative connection to the coupling element (2) and is arranged axially opposite to the first element (3), with the result that the two opposite elements (3, 4) can be moved apart via the movable coupling element (2), that is to say can be displaced longitudinally in the axial direction, wherein the elements (3, 4) are coupled to the coupling element (2) via corresponding thread pairings, **characterized in that**
the thread pairings are formed as opposite thread pairings in order to create a compact, substantially three-part linear drive (1) with a maximum travel distance, wherein the first element (3) is formed as a first threaded spindle (5) with a first spindle thread (5a), the second element (4) is formed as a second threaded spindle (6) with a second spindle thread (6a), and the coupling element (2) is formed as a spindle nut (7) with a respective nut thread (7a, 8a) corresponding to each spindle thread (5a, 6a) and interacting with the corresponding spindle thread (5a, 6a), wherein a first thread pairing (5a, 7a) comprising the first spindle thread (5a) and a corresponding first nut thread (7a) is formed oppositely to a second thread pairing (6a, 8a) comprising the second spindle thread (6a) and a corresponding second nut thread (8a), and wherein the coupling element (2) has two axially spaced-apart coupling regions each having a corresponding thread, which correspond to the respective thread of the elements (3, 4), wherein the threads are formed in axial alignment and the coupling element (2) has at least one driver device (14) via which an adjustable unit can be coupled to the linear drive (1), wherein the driver device (14) is arranged on a wall side of the coupling element (2) that faces away from a cavity in the coupling element (2).

2. Linear drive (1), in particular a spindle drive, having a rotationally driveable coupling element (2) which is arranged centrally between a first element (3) and a second element (4), the first element (3), which is coupled in operative connection to the coupling element (2), and the second element (4), which is coupled in operative connection to the coupling element (2) and is arranged axially opposite to the first element (3), with the result that the two opposite elements (3, 4) can be moved apart via the movable coupling element (2), that is to say can be displaced longitudinally in the axial direction, wherein the elements (3, 4) are coupled to the coupling element (2) via corresponding thread pairings, wherein the thread pairings are formed as opposite thread pairings in order to create a compact, substantially three-part linear drive (1) with a maximum travel distance, **characterized in that**
the first element (3) is formed as a first spindle nut (7) with a first nut thread (7a), the second element (4) is formed as a second spindle nut (8) with a second nut thread (8a), and the coupling element (2) is formed as a double threaded spindle (5) with a respective spindle thread (5a, 6a) corresponding to each nut thread (7a, 8a) and interacting with the corresponding nut thread (7a, 8a), wherein the double threaded spindle (5) is formed in a circumferentially outer region as a hollow spindle and can be formed in an inner region situated therein as a solid threaded spindle or as a hollow threaded spindle, wherein a first thread pairing (5a, 7a) comprising the first nut thread (7a) and a corresponding first spindle thread (5a) is formed oppositely to a second thread pairing (8a, 6a) comprising the second nut thread (8a) and a corresponding second spindle thread (6a), and the threads (5a, 6a, 7a, 8a) have the same thread pitch with opposite spindle pairing thread direction (5a-7a, 6a-8a), wherein the coupling element (2) has two axially spaced-apart coupling regions each having a corresponding thread, which correspond to the respective thread of the elements (3, 4), wherein the threads are formed in axial alignment, wherein a driver device (14) is arranged on a wall side of the coupling element (2) that faces away from a cavity in the coupling element (2), and/or the coupling element (2) has at least one driver device (14) via which an adjustable unit can be coupled to the linear drive (1), wherein the driver device (14) is arranged on a wall side of the coupling element (2) that faces away from a cavity of the coupling element (2).

3. Linear drive (1), in particular a spindle drive, having a rotationally driveable coupling element (2) which is arranged centrally between a first element (3) and a second element (4), the first element (3), which is coupled in operative connection to the coupling element (2), and the second element (4), which is coupled in operative connection to the coupling element (2) and is arranged axially opposite to the first element (3), with the result that the two opposite elements (3, 4) can be moved apart via the movable coupling element (2), that is to say can be displaced longitudinally in the axial direction, wherein the elements (3, 4) are coupled to the coupling element (2) via corresponding thread pairings, wherein the thread pairings are formed as opposite thread pairings in order to create a compact, substantially three-part linear drive (1) with a maximum travel distance, wherein the first element (3) is formed as a first threaded spindle (5) with a first spindle thread (5a), the second element (4) is formed as a second spindle nut (8) with a second nut thread (8a), and the coupling element (2) is formed as a threaded nut-spindle arrangement with a first nut thread (7a), which interacts with the first spindle thread (5a), and a second spindle thread (6a), which interacts with the second nut thread (8a), wherein a first thread pairing (5a, 7a) comprising the first nut thread (7a) and a corresponding first spindle thread (5a) is formed oppositely to a second thread pairing (8a, 6a) comprising the second nut thread (8a) and a corresponding second spindle thread (6a), wherein the threads (5a, 6a, 7a, 8a) have substantially the same thread pitch with opposite spindle pairing thread direction (5a-7a, 6a-8a), **characterized in that**
the coupling element (2) has at least one driver device (14) via which an adjustable unit can be coupled to the linear drive (1), wherein the driver device (14) is arranged on a wall side of the coupling element (2) that faces away from a cavity of the coupling element (2).

4. Linear drive (1) according to one of the preceding Claims 1 to 3, **characterized in that**
at least one of the two elements (3, 4) is formed as a hollow element with a hollow interior (9) into which the other element (4, 3) can be at least partially retracted.

5. Linear drive (1) according to one of the preceding Claims 1 to 4, **characterized in that** the linear drive (1) has at least one guide device (15) for guiding at least one of the elements (3, 4) .

6. Linear drive (1) according to one of the preceding Claims 1 to 5, **characterized in that** the spacing of the coupling regions is designed to correspond to at least one of the lengths of the threads of the elements (3, 4), with the result that at least one of the threads of the elements (3, 4) can be substantially retracted into a cavity defined between the coupling regions and a coupling wall.

7. Linear drive (1) according to one of the preceding Claims 1 to 6, **characterized in that** there is further provided an actuator device (10) having an actuator (11) for driving the coupling element (2).

8. Adjustable unit (16) comprising at least a first and a second adjustable part (17, 18), which are adjustable relative to one another, having a linear drive (1) according to one of the preceding Claims 1 to 7 for adjusting the adjustable unit (16) and/or the adjustable units which are connected thereto.

9. Adjustable unit (16) according to Claim 8, **characterized in that**
the first and/or the second adjustable part (17, 18) have/has an adjustable part cavity in which the linear drive (1) is at least partially arranged.

10. Adjustable unit (16) according to Claim 8 or 9, **characterized in that**
the first and/or the second adjustable part (17, 18) are/is adjustably coupled to the linear drive (1) via a driver (14) of the linear drive (1).

11. Adjustable unit (16) according to one of the preceding Claims 8 to 10, **characterized in that** the adjustable unit (16) is designed as a piece of furniture selected from the group comprising: table legs, chair legs, shelf unit legs, bed legs, bed adjusting devices, computer tables and the like.

## Revendications

1. Entraînement linéaire (1), en particulier entraînement à broche, muni d'un élément d'accouplement (2) qui est disposé au milieu entre un premier élément (3) et un deuxième élément (4) et qui peut être entraîné en rotation, du premier élément (3) qui est couplé en liaison opérationnelle à l'élément d'accouplement (2), et du deuxième élément (4) qui est couplé en liaison opérationnelle à l'élément d'accouplement (2) et qui est disposé axialement à l'opposé du premier élément (3) de sorte que les deux éléments (3, 4) opposés peuvent être écartés l'un de l'autre par l'intermédiaire de l'élément d'accouplement (2) mobile, c'est-à-dire qu'ils peuvent être déplacés longitudinalement en direction axiale, les éléments (3, 4) étant couplés à l'élément d'accouplement (2) par le biais de paires de filetages correspondants, **caractérisé en ce que** les paires de filetages sont réalisées sous la forme de paires de filetages à rotation opposée pour former un entraînement linéaire (1) compact, essentiellement en trois parties ayant une course de déplacement maximale, le premier élément (3) étant réalisé sous la forme d'une première broche filetée (5) avec un premier filetage de broche (5a), le deuxième élément (4) étant réalisé sous la forme d'une deuxième broche filetée (6) avec un deuxième filetage de broche (6a), et l'élément d'accouplement (2) étant réalisé sous la forme d'un écrou de broche (7) avec, pour chaque filetage de broche (5a, 6a), un filetage d'écrou (7a, 8a) correspondant coopérant avec le filetage de broche (5a, 6a) correspondant, une première paire de filetages (5a, 7a), comprenant le premier filetage de broche (5a) et un premier filetage d'écrou (7a) correspondant, étant réalisée avec un sens de rotation inversé à une seconde paire de filetages (6a, 8a) comprenant le deuxième filetage de broche (6a) et un deuxième filetage d'écrou (8a) correspondant, et l'élément d'accouplement (2) ayant deux zones d'accouplement espacées axialement l'une de l'autre et présentant chacune un filetage correspondant qui correspond au filetage respectif des éléments (3, 4), les filetages étant alignés axialement et l'élément d'accouplement (2) comprenant au moins un dispositif d'entraînement (14) par l'intermédiaire duquel une unité de réglage peut être couplée à l'entraînement linéaire (1), le dispositif d'entraînement (14) étant disposé sur un côté de paroi de l'élément d'accouplement (2) opposé à une cavité dans l'élément d'accouplement (2).

2. Entraînement linéaire (1), à savoir un entraînement à broche, muni d'un élément d'accouplement (2) qui est disposé au milieu entre un premier élément (3) et un deuxième élément (4) et qui peut être entraîné en rotation, du premier élément (3) qui est couplé en liaison opérationnelle à l'élément d'accouplement (2), et du deuxième élément (4) qui est couplé en liaison opérationnelle à l'élément d'accouplement (2) et qui est disposé axialement à l'opposé du premier élément (3) de sorte que les deux éléments (3, 4) opposés peuvent être écartés l'un de l'autre par l'intermédiaire de l'élément d'accouplement (2) mobile, c'est-à-dire qu'ils peuvent être déplacés longitudinalement en direction axiale, les éléments (3, 4) étant couplés à l'élément d'accouplement (2) par le biais de paires de filetages correspondants, les paires de filetages étant réalisées sous la forme de paires de filetages à rotation opposée pour former un entraînement linéaire (1) compact, essentiellement en trois parties ayant une course de déplacement maximale, **caractérisé en ce que** le premier élément (3) est réalisé sous la forme d'un premier écrou de broche (7) avec un premier filetage d'écrou (7a), le deuxième élément (4) est réalisé sous la forme d'un deuxième écrou de broche (8) avec un deuxième filetage d'écrou (8a), et l'élément de couplage (2) est réalisé sous la forme d'une broche à double filetage (5) avec un filetage de broche (5a, 6a) correspondant à chaque filetage d'écrou (7a, 8a) et coopérant avec le filetage d'écrou (7a, 8a) correspondant, la broche à double filetage (5) étant réalisée sous la forme d'une broche creuse dans une région externe circonférentielle et pouvant être réalisée, dans une région interne se trouve à l'intérieure, sous la forme d'une broche à filetage pleine ou d'une broche à filetage creuse, une première paire de filetages (5a, 7a), comprenant le premier filetage d'écrou (7a) et un premier filetage de broche (5a) correspondant, étant réalisée avec un sens de rotation inversé à une deuxième paire de filetages (8a, 6a) comprenant le deuxième filetage d'écrou (8a) et un deuxième filetage de broche (6a) correspondant, et les filetages (5a, 6a, 7a, 8a) présentant le même pas de filetage avec un sens de filetage des paires de broches (5a-7a, 6a-8a) inversé, l'élément d'accouplement (2) ayant deux zones d'accouplement espacées axialement l'une de l'autre et présentant chacune un filetage correspondant qui correspond au filetage respectif des éléments (3, 4), les filetages étant alignés axialement, un dispositif d'entraînement (14) étant disposé sur un côté de paroi de l'élément d'accouplement (2) opposé à une cavité dans l'élément d'accouplement (2), et/ou l'élément d'accouplement (2) comprenant au moins un dispositif d'entraînement (14) par l'intermédiaire duquel une unité de réglage peut être couplée à l'entraînement linéaire (1), le dispositif d'entraînement (14) étant disposé sur un côté de paroi de l'élément d'accouplement (2) opposé à une cavité dans l'élément d'accouplement (2).

3. Entraînement linéaire (1), à savoir un entraînement à broche, muni d'un élément d'accouplement (2) qui est disposé au milieu entre un premier élément (3) et un deuxième élément (4) et qui peut être entraîné en rotation, du premier élément (3) qui est couplé en liaison opérationnelle à l'élément d'accouplement (2), et du deuxième élément (4) qui est couplé en liaison opérationnelle à l'élément d'accouplement (2) et qui est disposé axialement à l'opposé du premier élément (3) de sorte que les deux éléments (3, 4) opposés peuvent être écartées l'un de l'autre par l'intermédiaire de l'élément d'accouplement (2) mobile, c'est-à-dire qu'ils peuvent être déplacés longitudinalement en direction axiale, les éléments (3, 4) étant couplés à l'élément d'accouplement (2) par le biais de paires de filetages correspondantes, les paires de filetages étant réalisées sous la forme de paires de filetages à sens de rotation inversé pour former un entraînement linéaire (1) compact, essentiellement en trois parties ayant une course de déplacement maximale, le premier élément (3) étant réalisé sous la forme d'une première broche filetée (5) avec un premier filetage de broche (5a), le deuxième élément (4) sous la forme d'un deuxième écrou de broche (8) avec un deuxième filetage d'écrou (8a) et l'élément d'accouplement (2) sous la forme d'une broche-écrou filetée avec un premier filetage d'écrou (7a) coopérant avec le premier filetage de broche (5a) et un deuxième filetage de broche (6a) coopérant avec le deuxième filetage d'écrou (8a), une première paire de filetages (5a, 7a), comprenant le premier filetage d'écrou (7a) et un premier filetage de broche (5a) correspondant, étant réalisée avec un sens de rotation inversé à une deuxième paire de filetages (8a, 6a) comprenant le deuxième filetage d'écrou (8a) et un deuxième filetage de broche (6a) correspondant, les filetages (5a, 6a, 7a, 8a) présentant sensiblement le même pas de filetage avec un sens de filetage des paires de broches (5a-7a, 6a-8a) inversé, **caractérisé en ce que** l'élément d'accouplement (2) comprend au moins un dispositif d'entraînement (14) par l'intermédiaire duquel une unité de réglage peut être couplée à l'entraînement linéaire (1), le dispositif d'entraînement (14) étant disposé sur un côté de paroi de l'élément d'accouplement (2) opposé à une cavité de l'élément d'accouplement (2).

4. Entraînement linéaire (1) selon l'une des revendications précédentes 1 à 3, **caractérisé en ce qu'**au moins l'un des deux éléments (3, 4) est réalisé sous la forme d'un élément creux avec un espace intérieur creux (9) dans lequel l'autre élément (4, 3) peut être au moins partiellement rentré.

5. Entraînement linéaire (1) selon l'une des revendications précédentes 1 à 4, **caractérisé en ce que** l'entraînement linéaire (1) est muni d'au moins un dispositif de guidage (15) pour guider au moins l'un des éléments (3, 4).

6. Entraînement linéaire (1) selon l'une des revendications précédentes 1 à 5, **caractérisé en ce que** la distance entre les zones d'accouplement est réalisée pour correspondre à au moins une des longueurs des filetages des éléments (3, 4), de sorte qu'au moins un des filetages des éléments (3, 4) peut être rentré essentiellement dans une cavité définie entre les zones d'accouplement et une paroi d'accouplement.

7. Entraînement linéaire (1) selon l'une des revendications précédentes 1 à 6, **caractérisé en ce qu'**un dispositif d'actionnement (10) avec un actionneur (11) est en outre prévu pour entraîner l'élément de couplage (2).

8. Unité de réglage (16) comprenant au moins une première et une deuxième partie de réglage (17, 18) pouvant être réglées l'une par rapport à l'autre, avec un entraînement linéaire (1) selon l'une des revendications précédentes 1 à 7 pour régler l'unité de réglage (16) et/ou les unités de réglage reliées à celui-ci.

9. Unité de réglage (16) selon la revendication 8, **caractérisée en ce que** la première et/ou la deuxième partie de réglage (17, 18) présente(nt) une cavité de pièce de réglage dans laquelle l'entraînement linéaire (1) est disposé au moins en partie.

10. Unité de réglage (16) selon la revendication 8 ou 9, **caractérisée en ce que** la première et/ou la deuxième partie de réglage (17, 18) est/sont couplée(s) de manière réglable à l'entraînement linéaire (1) par l'intermédiaire d'un entraînement (14) de l'entraînement linéaire (1).

11. Unité de réglage (16) selon l'une des revendications précédentes 8 à 10, **caractérisée en ce que** l'unité de réglage (16) est conçue comme un meuble choisi dans le groupe comprenant : des pieds de table, des pieds de chaise, des pieds d'étagère, des pieds de lit, des dispositifs de réglage de lit, des tables d'ordinateurs, et autres éléments comparables.
